# EUROPÄISCHE PATENTSCHRIFT

(11) **EP 3 688 052 B1**
(45) Veröffentlichungstag und Bekanntmachung des Hinweises auf die Patenterteilung: **10.11.2021**
(21) Anmeldenummer: 18769373.4
(22) Anmeldetag: 18.09.2018
(51) Int. Cl.: C08G 18/22, C09J 175/04, C08G 18/10, B32B 5/02, B32B 5/26, B32B 9/00, B32B 9/04, B32B 13/04, B32B 13/06, B32B 13/10, B32B 13/14, B32B 15/09, B32B 15/092, B32B 15/10, B32B 15/14, B32B 15/18, B32B 15/20, B32B 18/00, B32B 15/082, C09J 11/06

(54) **AKTIVATOR FÜR BESCHLEUNIGTEN HAFTUNGSAUFBAU**
ACTIVATOR FOR ACCELERATED ADHESIVE COMPOSITION
ACTIVATEUR POUR ADHÉRENCE PLUS RAPIDE

(30) Priorität: 26.09.2017 EP 17193116
(43) Veröffentlichungstag der Anmeldung: 05.08.2020
(73) Patentinhaber: Sika Technology AG, 6340 Baar (CH)
(72) Erfinder: JUNG, Claudia, 22859 Hamburg (DE); DEMMIG, Martin, 25451 Quickborn (DE); CANNAS, Rita, 8600 Dübendorf (CH)
(74) Vertreter: Sika Patent Attorneys
(86) Internationale Anmeldenummer: PCT/EP2018/075145
(87) Internationale Veröffentlichungsnummer: WO 2019/063353

(56) Entgegenhaltungen:
- EP-A1- 2 604 615
- EP-A1- 2 604 617
- EP-A1- 2 706 075
- WO-A1-2015/041921

## Beschreibung

### Technisches Gebiet

Die Erfindung betrifft das Gebiet der lösungsmittelbasierten Aktivatorzusammensetzungen.

### Stand der Technik

Lösungsmittelbasierte Aktivatoren, insbesondere als Haftvermittlervoranstriche, werden seit langem benutzt, um den Haftungsaufbau (Adhäsionsaufbau) von Klebstoffen, Dichtstoffen, Beschichtungen und Belägen auf dem Untergrund zu beschleunigen. Solche Aktivatoren ermöglichen eine schnellere Verklebung oder Beschichtung von Substraten, wobei der Aufbau der Adhäsion des Klebstoffs auf dem Substrat sehr rasch stattfindet und die Verklebung bereits nach kurzer Zeit ohne adhäsives Versagen belastet werden kann. Dies ermöglicht schnelle Taktzeiten in der industriellen Fertigung. Das schnelle Verdunsten der Lösungsmittel unterstützt weiterhin rasche Arbeits- und Zykluszeiten.

Für die Herstellung von Aktivatoren werden typischerweise Katalysatoren in Lösungsmitteln gelöst, welche die Aushärtung des Kleb- oder Dichtstoffs katalysieren. Bei der Anwendung verdunstet das Lösungsmittel weitgehend und der Klebstoff kann auf die so vorbehandelte Substratoberfläche aufgetragen werden. Dies bewirkt durch die hohe Konzentration an katalytisch aktiven Zentren an der Klebefläche den gewünschten raschen Adhäsionsaufbau WO 2015/041921 A1 offenbart lagerstabile Aktivatorzusammensetzungen, die neben einem Polyisocyanat ein 1,3-Dihydroxyphenol enthalten. Katalystoren auf Basis von Ketoamidatkomplexen werden in WP 2015/041921 A1 nicht genannt. EP 2 604 615 A1 offenbart Polyurethankatalysatoren in Form von Metall-Ketoamidatkomplexen mit hoher katalytischer Aktivität, die aufgrund ihrer hydrolytischen Stabilität über einen längeren Zeitraum stabil sind. .

Nachteilig an vielen bisher bekannten Aktivatorzusammensetzungen ist jedoch, dass die Löslichkeit solcher Kataysatoren, meist Metallkomplexe, in vielen bevorzugten Lösungsmitteln schlecht ist. Die Wahl des Lösungsmittels ist nämlich in vielen Anwendungen stark eingeschränkt, da prozessbedingte, enge Vorgaben an die Flüchtigkeit und gesundheitliche Unbedenklichkeit des Lösungsmittels bestehen. Dadurch entsteht der unerwünschte Effekt, dass nach kurzer Zeit Ausfällungen des Katalysators aus den Lösungen beobachtet werden. Eine Möglichkeit, diesem Nachteil zu begegnen ist die Verwendung von Emulgatoren oder anderen die Löslichkeit verbessernden Additiven. Solche Additive verteuern jedoch die Zusammensetzung und können die Adhäsion negativ beeinflussen.

Ebenfalls nachteilig ist, dass viele Katalysatoren nach dem Auftragen der Aktivatorzusammensetzung eine feste Grenzfläche zwischen dem Substrat und dem Klebstoff bilden. Dies führt oft dazu, dass nach einiger Zeit selbst bei gut haftenden Klebstoffen ein adhäsives Versagen zwischen dem Substrat und der gebildeten Schicht aus der Aktivatorzusammensetzung auftritt.

Beide genannten unerwünschten Effekte werden zusätzlich dadurch verstärkt, dass in vielen Fällen eine relativ hohe Konzentration an Katalysator in der Aktivatorzusammensetzung vorhanden sein muss, um die gewünschte Beschleunigung des Adhäsionsaufbaus zu erreichen.

Es besteht daher das Bedürfnis nach einer Aktivatorzusammensetzung, die eine gute Lagerstabilität ohne Ausfällungen des Katalysators aufweist und die keine Adhäsionsprobleme durch Bildung von Katalysatorablagerungen an der Grenzfläche von Substrat und Klebstoff verursacht. Weiterhin ist es wünschenswert, dass der Aktivator unabhängig von der verwendeten Menge eine zufriedenstellende Aktivatorwirkung entfalten würde und beispielsweise in sehr dünnen Schichten aufgetragen werden kann, was eine Zeitersparnis durch kürzere Ablüftzeiten und eine Kostenersparnis durch weniger Materialverbrauch mit sich bringt, oder in sehr grossen Auftragsmengen mit dicken Schichten, was eine bessere Aktivatorwirkung mit sich bringt.

### Darstellung der Erfindung

Aufgabe der vorliegenden Erfindung ist es daher, eine einkomponentige, lösungsmittelbasierte Aktivatorzusammensetzung bereitzustellen, welche mindestens einen Monat, bevorzugt mindestens 2 Monate, insbesondere mindestens 4 Monate oder länger lagerstabil ist ohne Ausfällungen des Katalysators zu zeigen. Weiterhin soll die Aktivatorzusammensetzung unabhängig von der aufgetragenen Menge aktiv sein und so kurze Ablüftzeiten aufweisen, dass nach kurzer Zeit, beispielsweise nach 30 Sekunden, der Klebstoff aufgetragen werden kann. Weiterhin soll die Aktivatorzusammensetzung einen 2-komponentigen Polyurethanklebstoff bezüglich Haftungsaufbau auf dem Klebesubstrat so beschleunigen können, dass nach höchstens einer Stunde nach Applikation des Klebstoffs und Aushärtung bei Raumtemperatur bereits mindestens 15%, bevorzugt mindestens 20% der Zugscherfestigkeit der Verklebung erreicht wird, die nach 24 h Lagerung bei Raumtemperatur erreicht werden kann, wobei das Bruchbild nach 1 h genauso kohäsiv sein soll wie nach 24 h.

Es hat sich überraschenderweise gezeigt, dass eine Aktivatorzusammensetzung gemäss Anspruch 1 diese Aufgaben erfüllen kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Aktivatorzusammensetzung, umfassend
a) zwischen 0.5 und 50 Gew.-% eines bei 23°C flüssigen Katalysators **K** für die Vernetzung von zweikomponentigen Klebstoffen,
b) zwischen 40 und 99.5 Gew.-% eines organischen Lösungsmittels **L,**
c) zwischen 0 und 10 Gew.-% mindestens eines Silans **S,** das mindestens eine hydrolysierbare Silangruppe und bevorzugt mindestens eine funktionelle Gruppe ausgewählt aus Mercapto-, Epoxy-, Amino-, Methacryl-, Vinyl- und Alkylgruppe aufweist,
dadurch gekennzeichnet, dass der Katalysator **K** einen 1,3-Ketoamidatkomplex eines Metalls umfasst und dass das Lösungsmittel **L** ausgewählt ist aus der Gruppe Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Isopropylacetat, Butylacetat, n-Butylpropionat, Diethylmalonat, 1-Methoxy-2-propylacetat, 3-Methoxy-n-butylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Ethylbenzol, Toluol, Xylol, Heptan, Octan, Naphtha, White Spirit, Petrolether, Benzin, Methylenchlorid, Methanol, Ethanol, Isopropanol, sowie Gemische dieser Lösungsmittel.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnet der Term "Silan" Verbindungen, welche einerseits mindestens eine, üblicherweise zwei, drei oder vier über Si-O-Bindungen direkt an das Siliciumatom gebundene Alkoxygruppen oder Acyloxygruppen aufweisen. Der Term "Organosilan" bezeichnet Silane, welche zudem mindestens einen, manchmal auch zwei oder drei über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar, jedoch gehören sie zu den Silanen. Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Alkoxy- oder Acyloxysilangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Silangruppen-haltige Polymere sind dabei insbesondere Silangruppen-haltige organische Polymere, welche üblicherweise und insbesondere in diesem Dokument gleichbedeutend auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Di-alkylzinn(IV)-carboxylaten, katalysiert.

Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.

Als "Aminosilane", "Hydroxysilane", bzw. "Mercaptosilane" werden Organosilane bezeichnet, deren organischer Rest eine Aminogruppe, Hydroxylgruppe, bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Zur Abschätzung der Lagerstabilität kann eine Lagerung unter erhöhten Temperaturen durchgeführt werden, was eine zeitlich längere Lagerung unter tieferen Temperaturen, wie Raumtemperatur, simuliert.

Als "Raumtemperatur" wird eine Temperatur von ca. 23°C bezeichnet. Alle im Dokument erwähnten Industriestandards und Normen beziehen sich auf die zum Zeitpunkt der Einreichung der Erstanmeldung gültigen Fassung. Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Ein erster wesentlicher Bestandteil der erfindungsgemässen Aktivatorzusammensetzung sind zwischen 0.5 und 50 Gew.-%, bevorzugt zwischen 0.75 und 25 Gew.-%, insbesondere zwischen 1 und 10 Gew.-%, bezogen auf die gesamte Zusammensetzung, eines bei 23°C flüssigen Katalysators **K** für die Vernetzung von zweikomponentigen Klebstoffen. Dieser Katalysator **K** umfasst einen 1,3-Ketoamidatkomplex eines Metalls.

Es ist für die Erfindung wesentlich, dass der Katalysator **K** als Reinsubstanz oder als Rückstand, nachdem das Lösungsmittel **L** verdampft ist, bei 23°C flüssig ist.

Die Wahl des Katalysators hängt im Wesentlichen davon ab, mit welchem Klebstoff der Aktivator verwendet wird. Dem Fachmann auf dem Gebiet der zweikomponentigen Klebstoffe, beispielsweise Polyurethanklebstoffe oder Klebstoffe auf Basis von Silan-terminierten Polymeren, weiss, welche Katalysatoren für ihre Aushärtung wirksam und geeignet sind.

Der Katalysator **K** umfasst mindestens einen Metallkatalysator mit mindestens einem 1,3-Ketoamidatliganden. Geeignete Metallkatalysatoren, die dem Fachmann auf dem Gebiet der Polyurethanchemie für die Reaktion von Hydroxylgruppen mit Isocyanatgruppen oder auf dem Gebiet der Alkoxysilanchemie für die Reaktion von Alkoxysilanen und/oder Silanolen bestens bekannt sind, sind beispielsweise Komplexe von Aluminium, Bismut, Eisen, Zink, Zirkonium oder Zinn.

Geeignete Katalysatoren **K** sind insbesondere Organozinn(IV)-Verbindungen, Verbindungen von Eisen(III), Bismut(III) oder Zirkonium(IV), insbesondere Eisen(III)-Komplexverbindungen. Die Liganden dieser Komplexe sind insbesondere ausgewählt aus Alkoholaten, Carboxylaten, 1,3-Diketonaten, Oxinat, 1,3-Ketoesteraten und 1,3-Ketoamidaten. Mindestens ein 1,3-Ketoamidatligand muss jedoch vorhanden sein.

Besonders bevorzugt sind Komplexverbindungen, insbesondere Eisen(III)-Komplexverbindungen, der Formel Fe(L)ₓ(Y)₃₋ₓ, wobei x für 1, 2 oder 3 steht, Y für einen einfach negativ geladenen Liganden steht und L für einen Liganden der Formel (I) steht, 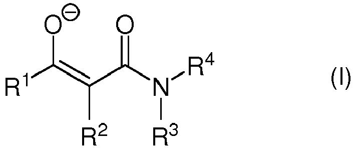 wobei R¹ und R² unabhängig voneinander für einen Wasserstoff-Rest, für einen einwertigen gesättigten oder ungesättigten Kohlenwasserstoff-Rest mit 1 bis 10 Kohlenstoff-Atomen, oder zusammen für einen zweiwertigen Alkylen-Rest mit 3 bis 6 Kohlenstoffatomen stehen und R³ und R⁴ unabhängig voneinander für einen Wasserstoff-Rest, einen einwertigen gesättigten Kohlenwasserstoff-Rest, der gegebenenfalls Heteroatome enthält, mit 1 bis 12 Kohlenstoffatomen, oder zusammen für einen zweiwertigen Alkylen-Rest, der gegebenenfalls Heteroatome enthält, mit 3 bis 6 Kohlenstoffatomen stehen. Die Herstellung solcher Komplexverbindungen ist in der EP2604617 beschrieben.

Bevorzugt sind Komplexverbindungen, insbesondere Eisen(III)-Komplexverbindungen, der Formel Fe(L)₃ mit drei gleichen Liganden L der Formel (I), wobei R¹ einen Alkylrest mit 1 bis 4 Kohlenstoffatomen oder einen Phenylrest darstellt, R² einen Wasserstoffrest darstellt und R³ und R⁴ einen Alkyl-Rest mit 1-8 Kohlenstoffatomen oder einen Alkylether-Rest mit 1-4 Kohlenstoffatomen darstellen.

Ganz besonders bevorzugt sind Komplexverbindungen, insbesondere Eisen(III)-Komplexverbindungen, der Formel Fe(L)₃ mit drei gleichen Liganden L der Formel (I), wobei R¹ für einen Methyl-Rest, R² für einen Wasserstoff-Rest und R³ und R⁴ jeweils für einen Ethyl-Rest, oder R¹ für einen Methyl-Rest, R² für einen Wasserstoff-Rest und R³ und R⁴ für einen Alkylether-Rest mit 3 Kohlenstoffatomen, oder R¹ für einen Phenyl-Rest, R² für einen Wasserstoff-Rest und R³ und R⁴ für einen Butyl-Rest, oder R¹ für einen Butyl-Rest, R² für einen Wasserstoff-Rest und R³ und R⁴ für einen Butyl-Rest stehen.

Besonders bevorzugte Liganden für Komplexverbindungen als Katalysator **K** sind 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclo-pentancarboxamidat, N,N-Dibutyl-3-oxo-3-phenylpropanamidat und N,N-Bis(2-methoxyethyl)-3-oxo-3-phenylpropanamidat. Diese werden besonders bevorzugt als Fe(III)-Komplexe eingesetzt. Eisen(III)-Ketoamidate haben den Vorteil, dass sie besonders hitzestabil sind und auch unter anspruchsvollen Temperaturbedingungen, beispielsweise über 100°C bis 150°C, nicht deaktiviert werden.

Als Katalysator K zusätzlich zum 1,3-Ketaoamidatkomplex geeignete Verbindungen sind stickstoffhaltige Verbindungen, wie insbesondere N-Ethyldiisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyltrimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.-Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.

Insbesondere geeignet sind auch Kombinationen verschiedener Katalysatoren, insbesondere Kombinationen aus mindestens einem Metallkatalysator und mindestens einer stickstoffhaltigen Verbindung.

In einer bevorzugten Ausführungsform der Aktivatorzusammensetzung umfasst der Katalysator **K** einen Komplex eines Metalls ausgewählt aus der Gruppe Fe, Bi, Al, Zn und Zr und wahlweise zusätzlich eine organische Verbindung ausgewählt aus der Gruppe tertiäre Amine, Guanidine und Amidine.

In einer bevorzugten Ausführungsform der Aktivatorzusammensetzung umfasst der Katalysator **K** einen 1,3-Ketoamidatkomplex eines Metalls, insbesondere einen Fe(III)- 1,3-Ketoamidatkomplex.

In einer bevorzugten Ausführungsform der Aktivatorzusammensetzung ist die Aktivatorzusammensetzung frei von Zinnverbindungen. Eine solche Zusammensetzung ist besonders anwender- und umweltfreundlich, da Zinnverbindungen gesundheitlich bedenklich und in einigen Fällen nachweislich toxisch sind.

Weiterhin umfasst die erfindungsgemässe Aktivatorzusammensetzung zwischen 40 und 99.5 Gew.-%, bevorzugt zwischen 65 und 99 Gew.-%, insbesondere zwischen 85 und 99 Gew.-%, bezogen auf die gesamte Zusammensetzung, eines organischen Lösungsmittels **L.**

Das Lösungsmittel **L** ist ausgewählt aus der Gruppe Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Isopropylacetat, Butylacetat, n-Butylpropionat, Diethylmalonat, 1-Methoxy-2-propylacetat, 3-Methoxy-n-butylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Ethylbenzol, Toluol, Xylol, Heptan, Octan, Naphtha, White Spirit, Petrolether, Benzin, insbesondere Solvesso™-Typen (von Exxon), Methylenchlorid, Methanol, Ethanol, Isopropanol, sowie Gemische dieser Lösungsmittel.

Bevorzugte Ausführungsformen der erfindungsgemässen Aktivatorzusammensetzung umfassen ein Lösungsmittel **L** ausgewählt aus der Gruppe n-Heptan, Ethanol, Isopropanol, Methylacetat, Ethylacetat, Butylacetat, Isopropylacetat, 1-Methoxy-2-propylacetat, 3-Methoxy-n-butylacetat, Aceton, Methylethylketon, Methylisobutylketon, Toluol, Ethylbenzol sowie Gemischen davon. Ganz besonders bevorzugt ist das Lösungsmittel **L** ausgewählt aus der Gruppe n-Heptan, Ethanol, Isopropanol, Ethylacetat, Methylethylketon, sowie Gemischen davon, wobei das Lösungsmittel L am meisten bevorzugt n-Heptan und/oder Ethanol umfasst oder daraus besteht. Eine Mischung aus n-Heptan und Ethanol ist besonders bevorzugt, da die Aktivatorzusammensetzung so besonders lagerstabil ist und gleichzeitig besonders schnell ablüftet.

Weiterhin umfasst die erfindungsgemässe Aktivatorzusammensetzung zwischen 0 und 10 Gew.-%, bevorzugt zwischen 0.25 und 10 Gew.-%, insbesondere zwischen 0.5 und 5 Gew.-%, bezogen auf die gesamte Zusammensetzung, mindestens eines Silans **S**, das mindestens eine hydrolysierbare Silangruppe, insbesondere zwei Silangruppen, und bevorzugt mindestens eine funktionelle Gruppe ausgewählt aus Mercapto-, Epoxy-, Amino-, Methacryl-, Vinyl- und Alkylgruppe aufweist.

Die Zugabe mindestens eines Silans **S** hat den Vorteil, dass ein kovalent oder über andere Wechselwirkungen haftender Film auf der Substratoberfläche gebildet wird, der die Adhäsion des Klebstoffs verbessert.

Geeignete Silane **S** sind einerseits Silane mit 4 hydrolysierbaren Bindungen am Siliziumatom, wie beispielsweise Tetraalkoxysilane, z.B. Tetramethoxy-, Tetraethoxysilane oder andere Tetraalkoxysilane, sowie deren Hydrolysate, Teilhydrolisate oder Kondensate.

Weiterhin geeignet und bevorzugt als Silane **S** sind Organosilane **OS**, welche zusätzlich zu den hydrolysierbaren Bindungen am Siliziumatom mindestens eine nicht hydrolysierbare Si-C-Bindung aufweisen, über die ein organischer Rest an das Siliziumatom gebunden ist. Beim organishcen Rest handelt es sich insbesondere um einen Rest mit einer Hydroxy-, Mercapto-, Epoxy-, Amino-, (Meth)acryl-, Vinyl- und/oder Alkylgruppe. Auch bei den Organosilanen **OS** ist es möglich, deren Hydrolysate, Teilhydrolisate oder Kondensate einzusetzen.

Bevozugte Organosilane **OS** umfassen Epoxysilane, wie insbesondere 3-Glycidoxypropyltrimethoxysilan oder 3-Glycidoxypropyltriethoxysilan, Hydroxysilane, (Meth)acrylosilane, Anhydridosilane, Carbamatosilane, Vinylsilane, Alkylsilane oder Iminosilane, oder oligomere Formen dieser Silane, Beispiele geeigneter Organosilane **OS** sind Octyltrimethoxysilan, Dodecyltrimethoxysilan, Hexadecyltrimethoxysilan, Methyloctyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, [3-(2-Aminoethylamino)-propyl]trimethoxysilan (= 4,7,10-Triazadecyl-trimethoxysilan), 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxa-heptyldimethoxymethylsilan, N-(Methyl)-3-aminopropyltrimethoxysilan, N-(n-butyl)-3-aminopropyltrimethoxysilan Bis-[3-(trimethoxysilyl)-propyl]-amin und Bis-[3-(triethoxysilyl)-propyl]-amin.; 3-Mercaptopropyltriethoxysilan, 3-Mercaptopropyltrimethoxysilan, 3-Mercaptopropyl-methyldimethoxysilan; 3-Acylthiopropyltrimethoxysilan; Vinyltrimethoxysilan und Vinyltriethoxysilan. Bis(3-trimethoxysilylpropyl)tetrasulfan, Bis(3-methyldimethoxysilyl-propyl)tetrasulfan, Bis(3-triethoxylsilylpropyl)tetrasulfan, Bis(3-methyldiethoxysilylpropyl)tetrasulfan, Bis(3-trimethoxysilylpropyl)disulfid, Bis(3-methyldimethoxysilylpropyl)disulfid, Bis(3-triethoxylsilylpropyl)disulfid und Bis(3-methyldiethoxysilylpropyl)disulfide; Isocyanuratosilanverbindungen wie 1,3,5-N-Tris(3-trimethoxysilylpropyl)-isocyanuratosilan, 1,3,5-N-Tris(3-methyldimethoxysilylpropyl)isocyanuratosilan, 1,3,5-N-Tris(3-triethoxysilylpropyl)isocyanuratosilan, 1,3,5-N-Tris(3-methyl-diethoxysilylpropyl)isocyanuratosilan; Auch geeignet sind die genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab. Ebenfalls geeignet sind Teilhydrolysate, Hydrolysate und Kondensate dieser genannten Silane, die als oligomere Organosiloxane auch kommerziell erhältlich sind.

Weiterhin geeignet als Organosilan **OS** sind die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis-(triethoxysilylpropyl)tetrasulfan), Bis(triethoxysilylpropyl)disulfid.

Weiterhin geeignet als Organosilan **OS** sind die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1H,3H,5H)-trion-harnstoff (=Tris(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Bevorzugt als Organosilane **OS** sind Aminosilane. Besonders bevorzugt sind 3-Aminopropyltrimethoxysilan, N-(2-Aminoethyl)-3-aminopropyltrimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Ebenfalls bevorzugt als Organosilane **OS** sind Vinylsilane, insbesondere Vinyltrimethoxysilan und Vinyltriethoxysilan. Diese Silane sind besonders günstig und zeigen trotzdem eine gute Wirkung.

Ebenfalls bevorzugt als Organosilane **OS** sind Methacrylsilane, insbesondere 3-Methacryloxypropyltrimethoxysilan.

In bevorzugten Ausführungsformen umfasst die erfindungsgemässe Aktivatorzusammensetzung zwischen 0.5 und 10 Gew.-% Silan S.

Bei Verwendung von Silanen **S** in der erfindungsgemässen Aktivatorzusammensetzung kann es vorteilhaft sein, ein Trocknungsmittel einzusetzen. Dieses erhöht die Lagerstabilität der Zusammensetzung, indem eventuell vorhandenes Wasser gebunden und somit die unerwünschte Hydrolyse von Alkoxysilanen im Gebinde gehemmt wird.

Als Trocknungsmittel geeignet sind zum Beispiel reaktive Silane, wie Tetramethoxysilan, Vinyltrimethoxysilan, α-funktionelle Silane wie N-(Silylmethyl)-O-methyl-carbamate, insbesondere N-(Methyldiethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe, sowie Isocyanate.

Die Menge an Trockungsmittel in der Aktivatorzusammensetzung beträgt zwischen 0 und 3 Gew.-%, bevorzugt zwischen 0.5 und 2 Gew.-%, bezogen auf die gesamte Zusammensetzung.

Eine besonders bevorzugte Ausführungsform der erfindungsgemässen Aktivatorzusammensetzung umfasst
a) zwischen 0.5 und 25 Gew.-%, bevorzugt zwischen 0.5 und 10 Gew.-%, des Katalysators **K**,
b) zwischen 65 und 99.5 Gew.-%, bevorzugt zwischen 85 und 99 Gew.-%, des organischen Lösungsmittels **L**,
c) zwischen 0 und 10 Gew.-%, bevorzugt zwischen 0.5 und 5 Gew.-%, eines Silans **S**.

Weiterhin kann es vorteilhaft sein, wenn die Aktivatorzusammensetzung weitere Additive enthält. Beispielsweise kann zusätzlich mindestens ein organischer Filmbildner eingesetzt werden. Hierbei kann es sich beispielsweise um ein Epoxidharz oder Poly(meth)acrylat handeln.

Die Zusammensetzung kann zusätzlich auch noch weitere Bestandteile aufweisen. Insbesondere handelt es sich hierbei um Farbstoffe, Pigmente, Tenside, Emulgatoren, Farbstoffe, UV-Marker, Fluoreszenzindikatoren, Biozide, Flammhemmer und Stabilisatoren, sowie weitere dem Fachmann auf dem Gebiet der Aktivatoren bekannte Additive. Insbesondere vorteilhaft kann ein UV-Marker als Additiv sein. Dabei handelt es sich um eine Substanz, die unter UV-Licht sichtbar wird. Die Verwendung einer solchen Substanz hat den Vorteil, dass nach dem Auftragen von nicht gefärbten Aktivatorzusammensetzungen überprüft werden kann, wo die Zusammensetzung genau aufgetragen worden ist und/oder wo der Klebstoff aufzutragen ist.

In einem weiteren Aspekt betrifft die vorliegende Erfindung die Verwendung einer Aktivatorzusammensetzung wie vorgehend beschrieben zur Beschleunigung des Haftungsaufbaus eines zweikomponentigen Klebstoffs, bevorzugt eines zweikomponentigen Polyurethanklebstoffs.

Als zweikomponentiger Klebstoff kann grundsätzlich jeder zweikomponentige Klebstoff verwendet werden, welcher nach Mischen der beiden Komponenten auszuhärten beginnt. Die Auswahl richtet sich unter anderem nach der Offenzeit und den mechanischen Erfordernissen an den gebildeten Verbund. Es hat sich gezeigt, dass die erfindungsgemässe Aktivatorzusammensetzung insbesondere gut für Polyurethan-Klebstoffe, insbesondere für Polyurethanklebstoffe, welche mindestens ein Isocyanatgruppen aufweisendes Polyurethanprepolymer enthalten, geeignet ist. Derartige zweikomponentige Polyurethanklebstoffe sind kommerziell breit erhältlich, insbesondere unter dem Namen SikaForce^{®} von Sika Automotive GmbH, Deutschland. Ebenfalls besonders gut geeignet ist die Aktivatorzusammensetzung für zweikomponentige silanterminierte (silanfunktionelle) Klebstoffe und zweikomponentige Silikonklebstoffe.

In einem weiteren Aspekt betrifft die vorliegende Erfindung ein Kit-of-parts, enthaltend
a) eine Aktivatorzusammensetzung wie vorgängig beschrieben,
b) einen zweikomponentigen Klebstoff wie vorgängig beschrieben, bevorzugt einen zweikomponentigen Polyurethanklebstoff.

In einem weiteren Aspekt betrifft die vorliegende Erfindung ein Verfahren zur Beschleunigung des Haftungsaufbaus auf einem Substrat **S1** beim Verkleben des Substrats **S1** mit einem zweiten Substrat **S2**, umfassend die Schritte
i) Applikation einer Aktivatorzusammensetzung wie vorgehend beschrieben auf mindestens eines der zu verklebenden Substrate **S1** und **S2**, bevorzugt auf beide Substrate **S1** und **S2**;
ii) Ablüften der applizierten Aktivatorzusammensetzung;
iii) Applikation eines zweikomponentigen Klebstoffes oder Dichtstoffes auf das erste Substrat **S1**;
iv) Kontaktieren des Klebstoffs oder Dichtstoffes mit einem zweiten Substrat **S2**; oder
   i) Applikation einer Aktivatorzusammensetzung gemäss einem der Ansprüche 1 bis 8 auf das erste Substrat **S1** und/oder das zweite Substrat **S2**;
   ii) Ablüften der applizierten Aktivatorzusammensetzung;
   iii) Applikation eines zweikomponentigen Klebstoffes oder Dichtstoffes auf das zweite Substrat **S2**;
   iv) Kontaktieren des Klebstoffs, der sich auf dem zweiten Substrat **S2** befindet mit dem ersten Substrat **S1**.

Die Ablüftzeit unter Schritt ii) beträgt bevorzugt höchstens 30 Sekunden. Die Applikation der Aktivatorzusammensetzung kann mittels eines Tuchs, beispielsweise eines Zellulosefasertuchs, erfolgen. Dies bewirkt eine besonders dünne Schicht der Aktivatorzusammensetzung, die rasch ablüftet. Andererseits kann sie auch mittels Pinsel, Wattebausch, Filz oder Schwamm aufgetragen werden. Dies bewirkt eine grössere Auftragsmenge und damit eine grössere Konzentration an katalytisch aktiven Teilchen auf dem Substrat nach dem Ablüften. Die erfindungsgemässe Aktivatorzusammensetzung hat den Vorteil, dass die Aktivatorwirkung im Wesentlichen unabhängig von der Auftragsmenge zufriedenstellend hoch ist.

In einer bevorzugten Ausführungsform des eben beschriebenen Verfahrens umfassen die Substrate **S1** und **S2** ein Metall, eine lackierte Oberfläche oder einen Kunststoff.

In derselben oder einer anderen bevorzugten Ausführungsform des eben beschriebenen Verfahrens ist der zweikomponentige Klebstoff ein Polyurethanklebstoff oder ein Klebstoff auf Basis silanfunktioneller Polymere oder ein Silikonklebstoff.

In einem weiteren Aspekt betrifft die vorliegende Erfindung einen Artikel, zu dessen Herstellung ein Verfahren wie eben beschrieben durchgeführt wird.

Beim ebengenannten Artikel handelt es sich insbesondere um ein Transportmittel, insbesondere ein Automobil, Bus, Lastkraftwagen, Schienenfahrzeug, Schiff oder ein Luftfahrzeug.

Das Substrat **S1** kann gleich oder verschieden von Substrat **S2** sein. Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke. Insbesondere bevorzugt als Substrate **S1** oder **S2** sind Glas, Glaskeramik, Aluminium, e-coat (tauchlackierte Oberflächen) und Kompositmaterialien wie Kohlenstofffaserverstärkter Kunststoff (CFK), Glasfaserverstärkter Kunststoff (GFK) und Sheet Molding Compound (SMC).

Die Substrate können bei Bedarf vor dem Applizieren des Klebstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

### Beispiele

Es wurden die folgenden Aktivatorzusammensetzungen gemäss Tabelle 1 hergestellt, indem der Katalysator **K** dem Lösungsmittel **L** zugegeben wurde und unter Stickstoff gut verrührt wurde. In allen Fällen wurde n-Heptan als Lösungsmittel verwendet und ein Gew.-% an Katalysator **K,** bezogen auf die gesamte resultierende Zusammensetzung, zugegeben.

**Tabelle 1: Hergestellte Aktivatorzusammensetzungen.**

| **Aktivator** | **Katalysator K** | **Handelsname (Hersteller) Katalysator K** | **Bemerkungen** |
|---|---|---|---|
| A-1 (Ref.) | Acetylacetonato-Fe(III) | Fe(acac)₃ (Sigma Aldrich) | Löslich und lagerstabil |
| A-2 (Ref.) | Bi(III)-carboxylat | K-Kat XK-651 (King Industries) | Löslich und lagerstabil |
| A-3 (Ref.) | Dibutylzinndilaurat | Addocat 201 (Lanxess) | Löslich und lagerstabil |
| A-4 | Fe(III)-tris(N,N,-diethyl-3-oxobutanamidat) | (nach Vorschrift in EP2604617) | Löslich und lagerstabil |
| A-5 | Fe(III)-tris(N,N,-dibutyl-3-oxoheptanamidat) | (nach Vorschrift in EP2604617) | Löslich und lagerstabil |
| A-6 | Fe(III)-tris(N,N,-dibutyl-3-oxohexanamidat) | (nach Vorschrift in EP2604617) | Löslich und lagerstabil |
| A-7 (Ref.) | Dioctylzinndilaurat | TIB KAT 216 (TIB Chemicals) | Löslich und lagerstabil |
| A-8 (Ref.) | Dioctylzinnthioglycolat | Fomrez UL-29 (Momentive) | Nach ein paar Tagen leichte Ausfällungen |
| A-9 (Ref.) | Dimethylzinnthioglycolat | Fomrez UL-54(Momentive) | Nach ein paar Tagen leichte Ausfällungen |
| A-10 (Ref.) | 1,3,5-tris(3-(dimethylamino)propyl)-hexahydro-s-triazin | Jeffcat TR-90 (Huntsman) | Löslich und lagerstabil |

Die Aktivatorzusammensetzungen in Tabelle 1 wurden in dicht schliessende Glasflaschen gegeben und nach 1 Tag Lagerung bei Raumtemperatur für die Haftversuche verwendet. Als Substrat wurde durch kathodische Tauchlackierung beschichtete Platten verwendet (Firma Rocholl, Deutschland).

### Adhäsionstest der Haftvermittlerzusammensetzungen

Die Zusammensetzungen wurden mittels damit getränktem Zellulosetuch (Tela®, Tela-Kimberly Switzerland GmbH) oder mittels eines Wattebausches auf das Susbtrat appliziert. Bei der Applikation mit Wattebausch wurde deutlich mehr Aktivator auf die Klebefläche aufgetragen, so dass ein Verlaufen der Aktivatorlösung sichtbar war. Alle Substratuntergründe wurden unmittelbar vor der Applikation der Haftvermittlerzusammensetzung durch Abwischen mittels eines Zellulosetuches (Tela®), welches mit Isopropanol getränkt wurde, gereinigt und mindestens 2 Minuten vor der Applikation der Haftvermittlerzusammensetzung abgelüftet.

30 Sekunden nach Applikation der Haftvermittlerzusammensetzung wurde ein zweikomponentiger Polyurethanklebstoff SikaForce®-7666 L10 BT mittels Auspresskartusche und Düse aufgetragen, so dass sich eine Klebefläche von 15x45 mm und eine Schichtdicke von 1.6 mm ergab. SikaForce®-7666 L10 BT ist ein hochmoduliger, zweikomponentiger Polyurethanklebstoff, welcher bei Sika Automotive GmbH, Deutschland kommerziell erhältlich ist.

Der Klebstoff wurde nach einer Aushärtezeit von 1 Stunde nach Klimaraumlagerung (,1h') (23°C, 50% rel. Luftfeuchtigkeit), sowie nach 24 h Klimaraumlagerung (,24h') getestet.

Die Haftung des Klebstoffes wurde mittels Zugscherfestigkeitstest und Analyse des Bruchbildes getestet. Hierbei wurden die Zugscherfestigkeit in Anlehnung an ISO 4587/DIN EN 1465 auf einer Zugmaschine Zwick/Roell Z010 bestimmt, an den oben beschriebenen miteinander verklebten KTL-Substraten (Klebefläche: 15x45 mm; Schichtdicke: 1.6 mm; Messgeschwindigkeit: 10 mm/min; Temperatur: 23°C). Alle erfindungsgemässen Aktivatoren lieferten vollständig kohäsive Bruchbilder.

Die Adhäsion wurde über das Bruchbild an den mit Aktivator vorbehandelten Substraten beurteilt. Gewünscht ist ein rein kohäsives Versagen.

Alle hergestellten erfindungsgemässen Zusammensetzungen wiesen eine ausgezeichnete Lagerstabilität auf. Selbst nach mehreren Monaten waren keine Ausfällungen oder Trübungen zu beobachten.

**Tabelle 2: Zugscherfestigkeit der Testverklebungen. * teilweises oder vollständiges adhäsives Versagen der Verklebung.**

| **Auftragung** | **Zellulosetuch** | | **Wattebausch** | |
|---|---|---|---|---|
| *Aushärtezeit* | *1h RT* | *24h RT* | *1h RT* | *24h RT* |
| **Aktivator** | **Zugscherfestigkeit [MPa]** | | | |
| Ohne (Ref.) | 1.63^{*} | 7.80 | 1.63* | 7.80 |
| A-1 (Ref.) | 2.20 | 5.49 | 1.41* | 7.76 |
| A-2 (Ref.) | 1.24* | 6.56 | 0.59* | 4.31* |
| A-3 (Ref.) | 0.45* | 5.00* | 1.63 | 4.77* |
| A-4 | 1.37 | 8.44 | 1.71 | 7.89 |
| A-5 | 2.07 | 9.15 | 2.41 | 7.96 |
| A-6 | 2.34 | 8.77 | 2.42 | 8.32 |
| A-7 (Ref.) | 0.26* | 1.89* | 0.57* | 2.99* |
| A-8 (Ref.) | 0.65* | 7.63 | 0.75* | 5.45* |
| A-9 (Ref.) | 1.80 | 7.45 | 0.46* | 6.17 |
| A-10 (Ref.) | 1.61 | 4.07* | 0.62* | 6.76 |

Zusätzlich wurden Versuche mit einer Infrarot (IR) -Aushärtung durchgeführt. Dabei wurde ein Prüfblech wie für die Verklebungen oben beschrieben mit der Aktivatorzusammensetzung beschichtet in eine IR-Anlage eingespannt und von unten vorgeheizt. Währenddessen wurde auf der Gegenseite der Klebstoff aufgetragen. Nach einer definierten Aufheizphase wurde ein zweites beschichtetes Prüfblech eingespannt und somit gefügt. Der Klebstoff und die Aktivatorschicht wiesen dabei eine Temperatur von 105°C auf. Danach wurde die Verklebung während 24h bei Normklima gelagert. Von allen Aktivatoren A-1 bis A-10 zeigten nur A-4, A-5 und A-6 ein vollständig kohäsives Bruchbild und die erwarteten Festigkeiten unabhängig von der Auftragsmenge des Aktivators.

## Patentansprüche

1. Aktivatorzusammensetzung, umfassend
a) zwischen 0.5 und 50 Gew.-% eines bei 23°C flüssigen Katalysators K für die Vernetzung von zweikomponentigen Klebstoffen,
b) zwischen 40 und 99.5 Gew.-% eines organischen Lösungsmittels L,
c) zwischen 0 und 10 Gew.-% mindestens eines Silans **S**, das mindestens eine hydrolysierbare Silangruppe und bevorzugt mindestens eine funktionelle Gruppe ausgewählt aus Mercapto-, Epoxy-, Amino-, Methacryl-, Vinyl- und Alkylgruppe aufweist,
**dadurch gekennzeichnet, dass** der Katalysator K einen 1,3-Ketoamidatkomplex eines Metalls umfasst, und dass das Lösungsmittel L ausgewählt ist aus der Gruppe Aceton, Methylethylketon, Methyl-n-propylketon, Diisobutylketon, Methylisobutylketon, Methyl-n-amylketon, Methylisoamylketon, Acetylaceton, Mesityloxid, Cyclohexanon, Methylcyclohexanon, Ethylacetat, Propylacetat, Isopropylacetat, Butylacetat, n-Butylpropionat, Diethylmalonat, 1-Methoxy-2-propylacetat, 3-Methoxy-n-butylacetat, Ethyl-3-ethoxypropionat, Diisopropylether, Diethylether, Dibutylether, Diethylenglykoldiethylether, Ethylenglykoldiethylether, Ethylenglykolmonopropylether, Ethylenglykolmono-2-ethylhexylether, Ethylbenzol, Toluol, Xylol, Heptan, Octan, Naphtha, White Spirit, Petrolether, Benzin, Methylenchlorid, Methanol, Ethanol, Isopropanol, sowie Gemische dieser Lösungsmittel.

2. Aktivatorzusammensetzung gemäss Anspruch 1, **dadurch gekennzeichnet, dass** das Lösungsmittel **L** ausgewählt ist aus der Gruppe n-Heptan, Ethanol, Isopropanol, Methylacetat, Ethylacetat, Butylacetat, Isopropylacetat, 1-Methoxy-2-propylacetat, 3-Methoxy-n-butylacetat, Aceton, Methylethylketon, Methylisobutylketon, Toluol, Ethylbenzol sowie Gemischen davon.

3. Aktivatorzusammensetzung gemäss Anspruch 2, **dadurch gekennzeichnet, dass** das Lösungsmittel **L** ausgewählt ist aus der Gruppe n-Heptan, Ethanol, Isopropanol, Ethylacetat, Methylethylketon, sowie Gemischen davon, wobei das Lösungsmittel **L** bevorzugt n-Heptan und/oder Ethanol umfasst oder daraus besteht.

4. Aktivatorzusammensetzung gemäss einem der Ansprüche 1 bis 3, **dadurch gekennzeichnet, dass** der Katalysator **K** einen Komplex eines Metalls ausgewählt aus der Gruppe Fe, Bi, Al, Zn und Zr umfasst.

5. Aktivatorzusammensetzung gemäss Anspruch 4, **dadurch gekennzeichnet, dass** der Katalysator **K** eine organische Verbindung ausgewählt aus der Gruppe tertiäre Amine, Guanidine und Amidine umfasst.

6. Aktivatorzusammensetzung gemäss einem der vorhergehenden Ansprüche, **dadurch gekennzeichnet, dass** die Aktivatorzusammensetzung frei ist von Zinnverbindungen.

7. Aktivatorzusammensetzung gemäss einem der vorhergehenden Ansprüche, **dadurch gekennzeichnet, dass** die Aktivatorzusammensetzung zwischen 0.5 und 10 Gew.-% Silan **S** umfasst.

8. Aktivatorzusammensetzung gemäss einem der vorhergehenden Ansprüche, umfassend
a) zwischen 0.5 und 25 Gew.-%, bevorzugt zwischen 0.5 und 10 Gew.-%, des Katalysators **K**,
b) zwischen 65 und 99.5 Gew.-%, bevorzugt zwischen 85 und 99 Gew.-%, des organischen Lösungsmittels **L**,
c) zwischen 0 und 10 Gew.-%, bevorzugt zwischen 0.5 und 5 Gew.-%, eines Silans **S**.

9. Verwendung einer Aktivatorzusammensetzung gemäss einem der Ansprüche 1 bis 8 zur Beschleunigung des Haftungsaufbaus eines zweikomponentigen Klebstoffs, bevorzugt eines zweikomponentigen Polyurethanklebstoffs.

10. Kit-of-parts, enthaltend
c) eine Aktivatorzusammensetzung nach einem der Ansprüche 1 bis 8,
d) einen zweikomponentigen Klebstoff, bevorzugt einen zweikomponentigen Polyurethanklebstoff.

11. Verfahren zur Beschleunigung des Haftungsaufbaus auf einem Substrat **S1** beim Verkleben des Substrats **S1** mit einem zweiten Substrat **S2**, umfassend die Schritte
i) Applikation einer Aktivatorzusammensetzung gemäss einem der Ansprüche 1 bis 8 auf mindestens eines der beiden Substrate;
ii) Ablüften der applizierten Aktivatorzusammensetzung;
iii) Applikation eines zweikomponentigen Klebstoffes oder Dichtstoffes auf das erste Substrat **S1**;
iv) Kontaktieren des Klebstoffs oder Dichtstoffes mit einem zweiten Substrat **S2**;
oder
i) Applikation einer Aktivatorzusammensetzung gemäss einem der Ansprüche 1 bis 8 auf mindestens eines der beiden Substrate;
ii) Ablüften der applizierten Aktivatorzusammensetzung;
iii) Applikation eines zweikomponentigen Klebstoffes oder Dichtstoffes auf das zweite Substrat **S2**;
iv) Kontaktieren des Klebstoffs, der sich auf dem zweiten Substrat **S2** befindet mit dem ersten Substrat **S1**.

12. Verfahren gemäss Anspruch 11, **dadurch gekennzeichnet, dass** mindestens eines der Substrate **S1** und **S2** ein Metall, eine lackierte Oberfläche oder ein Kunststoff umfasst.

13. Verfahren gemäss Anspruch 11 oder 12, **dadurch gekennzeichnet, dass** der zweikomponentige Kleb- oder Dichtstoff ein Polyurethanklebstoff oder ein Klebstoff auf Basis silanfunktioneller Polymere ist.

14. Artikel zu dessen Herstellung ein Verfahren gemäss einem der Ansprüche 11 bis 13 durchgeführt wird.

15. Artikel nach Anspruch 14, **dadurch gekennzeichnet, dass** der Artikel ein Transportmittel, insbesondere ein Automobil, Bus, Lastkraftwagen, Schienenfahrzeug, Schiff oder ein Luftfahrzeug ist.

## Claims

1. Activator composition comprising
a) between 0.5% and 50% by weight of a catalyst **K** which is liquid at 23°C for the crosslinking of two-component adhesives,
b) between 40% and 99.5% by weight of an organic solvent **L**,
c) between 0% and 10% by weight of at least one silane **S** having at least one hydrolyzable silane group and preferably at least one functional group selected from mercapto, epoxy, amino, methacryloyl, vinyl and alkyl group,
**characterized in that** the catalyst **K** comprises a 1,3-ketoamidate complex of a metal, and **in that** the solvent **L** is selected from the group of acetone, methyl ethyl ketone, methyl n-propyl ketone, diisobutyl ketone, methyl isobutyl ketone, methyl n-amyl ketone, methyl isoamyl ketone, acetylacetone, mesityl oxide, cyclohexanone, methylcyclohexanone, ethyl acetate, propyl acetate, isopropyl acetate, butyl acetate, n-butyl propionate, diethyl malonate, 1-methoxy-2-propyl acetate, 3-methoxy-n-butyl acetate, ethyl 3-ethoxypropionate, diisopropyl ether, diethyl ether, dibutyl ether, diethylene glycol diethyl ether, ethylene glycol diethyl ether, ethylene glycol monopropyl ether, ethylene glycol mono-2-ethylhexyl ether, ethylbenzene, toluene, xylene, heptane, octane, naphtha, white spirit, petroleum ether, benzine, methylene chloride, methanol, ethanol, isopropanol, and mixtures of these solvents.

2. Activator composition according to Claim 1, **characterized in that** the solvent **L** is selected from the group of n-heptane, ethanol, isopropanol, methyl acetate, ethyl acetate, butyl acetate, isopropyl acetate, 1-methoxy-2-propyl acetate, 3-methoxy-n-butyl acetate, acetone, methyl ethyl ketone, methyl isobutyl ketone, toluene, ethylbenzene and mixtures thereof.

3. Activator composition according to Claim 2, **characterized in that** the solvent L is selected from the group of n-heptane, ethanol, isopropanol, ethyl acetate, methyl ethyl ketone, and mixtures thereof, where the solvent **L** preferably comprises or consists of n-heptane and/or ethanol.

4. Activator composition according to any of Claims 1 to 3, **characterized in that** the catalyst **K** comprises a complex of a metal selected from the group of Fe, Bi, Al, Zn and Zr.

5. Activator composition according to Claim 4, **characterized in that** the catalyst **K** comprises an organic compound selected from the group of tertiary amines, guanidines and amidines.

6. Activator composition according to any of the preceding claims, **characterized in that** the activator composition is free of tin compounds.

7. Activator composition according to any of the preceding claims, **characterized in that** the activator composition comprises between 0.5% and 10% by weight of silane **S**.

8. Activator composition according to any of the preceding claims, comprising
a) between 0.5% and 25% by weight, preferably between 0.5% and 10% by weight, of the catalyst **K**,
b) between 65% and 99.5%, preferably between 85% and 99% by weight, of the organic solvent **L**,
c) between 0% and 10% by weight, preferably between 0.5% and 5% by weight, of a silane **S.**

9. Use of an activator composition according to any of Claims 1 to 8 for accelerating the buildup of adhesion in a two-component adhesive, preferably a two-component polyurethane adhesive.

10. Kit of parts comprising
c) an activator composition according to any of Claims 1 to 8,
d) a two-component adhesive, preferably a two-component polyurethane adhesive.

11. Method of accelerating the buildup of adhesion on a substrate **S1** in the bonding of the substrate **S1** to a second substrate **S2**, comprising the steps of
i) applying an activator composition according to any of Claims 1 to 8 to at least one of the two substrates;
ii) flashing off the activator composition applied;
iii) applying a two-component adhesive or sealant to the first substrate **S1**;
iv) contacting the adhesive or sealant with a second substrate **S2**;
or
i) applying an activator composition according to any of Claims 1 to 8 to at least one of the two substrates;
ii) flashing off the activator composition applied;
iii) applying a two-component adhesive or sealant to the second substrate **S2**;
iv) contacting the adhesive present on the second substrate **S2** with the first substrate **S1**.

12. Method according to Claim 11, **characterized in that** at least one of the substrates **S1** and **S2** comprises a metal, a painted surface or a plastic.

13. Method according to Claim 11 or 12, **characterized in that** the two-component adhesive or sealant is a polyurethane adhesive or an adhesive based on silane-functional polymers.

14. Article produced by a method according to any of Claims 11 to 13.

15. Article according to Claim 14, **characterized in that** the article is a mode of transport, especially an automobile, bus, truck, rail vehicle, ship or aircraft.

## Revendications

1. Composition d'activateur, comportant :
a) entre 0,5 et 50 % en poids d'un catalyseur **K** liquide à 23 °C pour la réticulation d'adhésifs bicomposants,
b) entre 40 et 99,5 % en poids d'un solvant organique **L**,
c) entre 0 et 10 % en poids d'au moins un silane **S**, qui comprend au moins un groupe silane hydrolysable et de préférence au moins un groupe fonctionnel choisi parmi un groupe mercapto, époxy, amino, méthacryle, vinyle et alkyle,
**caractérisée en ce que** le catalyseur **K** comporte un complexe de 1,3-cétoamidate d'un métal, et **en ce que** le solvant **L** est choisi dans le groupe constitué par l'acétone, la méthyléthylcétone, la méthyl-n-propylcétone, la diisobutylcétone, la méthylisobutylcétone, la méthyl-n-amylcétone, la méthylisoamylcétone, l'acétylacétone, l'oxyde de mésityle, la cyclohexanone, la méthylcyclohexanone, l'acétate d'éthyle, l'acétate de propyle, l'acétate d'isopropyle, l'acétate de butyle, le propionate de n-butyle, le malonate de diéthyle, l'acétate de 1-méthoxy-2-propyle, l'acétate de 3-méthoxy-n-butyle, le 3-éthoxypropionate d'éthyle, l'éther diisopropylique, l'éther diéthylique, l'éther dibutylique, l'éther diéthylique de diéthylène glycol, l'éther diéthylique d'éthylène glycol, l'éther monopropylique d'éthylène glycol, l'éther mono-2-éthylhexylique d'éthylène glycol, l'éthylbenzène, le toluène, le xylène, l'heptane, l'octane, le naphta, le White Spirit, l'éther de pétrole, l'essence, le chlorure de méthylène, le méthanol, l'éthanol, l'isopropanol, ainsi que des mélanges de ces solvants.

2. Composition d'activateur selon la revendication 1, **caractérisée en ce que** le solvant **L** est choisi dans le groupe constitué par le n-heptane, l'éthanol, l'isopropanol, l'acétate de méthyle, l'acétate d'éthyle, l'acétate de butyle, l'acétate d'isopropyle, l'acétate de 1-méthoxy-2-propyle, l'acétate de 3-méthoxy-n-butyle, l'acétone, la méthyléthylcétone, la méthylisobutylcétone, le toluène, l'éthylbenzène, ainsi que des mélanges de ceux-ci.

3. Composition d'activateur selon la revendication 2, **caractérisée en ce que** le solvant **L** est choisi dans le groupe constitué par le n-heptane, l'éthanol, l'isopropanol, l'acétate d'éthyle, la méthyléthylcétone, ainsi que des mélanges de ceux-ci, le solvant **L** comportant de préférence du n-heptane et/ou de l'éthanol ou en étant constitué.

4. Composition d'activateur selon l'une quelconque des revendications 1 à 3, **caractérisée en ce que** le catalyseur **K** comporte un complexe d'un métal choisi dans le groupe constitué par Fe, Bi, Al, Zn et Zr.

5. Composition d'activateur selon la revendication 4, **caractérisée en ce que** le catalyseur **K** comporte un composé organique choisi dans le groupe constitué par les amines tertiaires, les guanidines et les amidines.

6. Composition d'activateur selon l'une quelconque des revendications précédentes, **caractérisée en ce que** la composition d'activateur est exempte de composés d'étain.

7. Composition d'activateur selon l'une quelconque des revendications précédentes, **caractérisée en ce que** la composition d'activateur comporte entre 0,5 et 10 % en poids de silane **S**.

8. Composition d'activateur selon l'une quelconque des revendications précédentes, comportant :
a) entre 0,5 et 25 % en poids, de préférence entre 0,5 et 10 % en poids, du catalyseur **K**,
b) entre 65 et 99,5 % en poids, de préférence entre 85 et 99 % en poids, du solvant organique **L**,
c) entre 0 et 10 % en poids, de préférence entre 0,5 et 5 % en poids, d'un silane **S**.

9. Utilisation d'une composition d'activateur selon l'une quelconque des revendications 1 à 8 pour l'accélération de la formation d'adhérence d'un adhésif bicomposant, de préférence d'un adhésif polyuréthane bicomposant.

10. Jeu de pièces, contenant :
c) une composition d'activateur selon l'une quelconque des revendications 1 à 8,
d) un adhésif bicomposant, de préférence un adhésif polyuréthane bicomposant.

11. Procédé d'accélération de la formation d'adhérence sur un substrat **S1** lors du collage du substrat **S1** avec un deuxième substrat **S2,** comportant les étapes suivantes :
i) l'application d'une composition d'activateur selon l'une quelconque des revendications 1 à 8 sur au moins un des deux substrats ;
ii) la ventilation de la composition d'activateur appliquée ;
iii) l'application d'un adhésif ou d'un agent d'étanchéité bicomposant sur le premier substrat **S1** ;
iv) la mise en contact de l'adhésif ou de l'agent d'étanchéité avec un deuxième substrat **S2** ;
ou
i) l'application d'une composition d'activateur selon l'une quelconque des revendications 1 à 8 sur au moins un des deux substrats ;
ii) la ventilation de la composition d'activateur appliquée ;
iii) l'application d'un adhésif ou d'un agent d'étanchéité bicomposant sur le deuxième substrat **S2** ;
iv) la mise en contact de l'adhésif, qui se trouve sur le deuxième substrat **S2**, avec le premier substrat **S1**.

12. Procédé selon la revendication 11, **caractérisé en ce qu'**au moins un des substrats **S1** et **S2** comporte un métal, une surface vernie ou une matière plastique.

13. Procédé selon la revendication 11 ou 12, **caractérisé en ce que** l'adhésif ou l'agent d'étanchéité bicomposant est un adhésif polyuréthane ou un adhésif à base de polymères à fonction silane.

14. Article pour la fabrication duquel un procédé selon l'une quelconque des revendications 11 à 13 est réalisé.

15. Article selon la revendication 14, **caractérisé en ce que** l'article est un moyen de transport, notamment une automobile, un bus, un camion, un véhicule ferroviaire, un navire ou un aéronef.
